# EUROPÄISCHE PATENTSCHRIFT

(11) **EP 2 032 885 B1**
(45) Veröffentlichungstag und Bekanntmachung des Hinweises auf die Patenterteilung: **14.10.2009**
(21) Anmeldenummer: 08773698.9
(22) Anmeldetag: 21.06.2008
(51) Int. Cl.: F16L 33/01

(54) **VERBINDUNGSEINRICHTUNG FÜR EINE SCHLAUCHLEITUNG**
CONNECTING DEVICE FOR A HOSE LINE
DISPOSITIF D'ASSEMBLAGE POUR UN CÂBLE SOUPLE

(30) Priorität: 21.06.2007 DE 102007029776; 09.08.2007 DE 102007038367
(43) Veröffentlichungstag der Anmeldung: 11.03.2009
(73) Patentinhaber: Roman Seliger GmbH, 22848 Norderstedt (DE)
(72) Erfinder: HAMKENS, Hauke-Peter, 25832 Tönning (DE); BRANDT, Holger, 22869 Schenefeld (DE); ADAM, Michael, 24589 Nortorf (DE); SCHWARZ, Eugen, 21033 Hamburg (DE); BUHK, Birger, 21039 Hamburg (DE)
(74) Vertreter: Wenzel & Kalkoff
(86) Internationale Anmeldenummer: PCT/EP2008/005222
(87) Internationale Veröffentlichungsnummer: WO 2008/155142

(56) Entgegenhaltungen:
- EP-A1- 0 707 170
- DE-A1- 2 060 280
- FR-A- 2 210 269
- GB-A- 954 051

## Beschreibung

Die Erfindung betrifft eine Verbindungseinrichtung für eine Schlauchleitung, umfassend eine zum Einbinden der Schlauchleitung eingerichtete Stutzeneinrichtung mit Stutzen und ein an einem Anschlussfuß des Stutzens befestigbares rohrförmiges Leitungsanschlussteil. Eine gattungsgemäße Verbindungseinrichtung weist die Merkmale nach dem Oberbegriff von Anspruch 1 auf. Der Stutzen ist in das Ende des Tragschlauchs einsteckbar und weist zu diesem Zweck einen rohrförmigen Steckkörper mit längsseitiger Umfangsklemmfläche zur Steck- und Klemmverbindung mit dem Schlauchende auf. Eine mit der Umfangsklemmfläche zusammenwirkende Klemmeinrichtung wird zum Sichern der Schlaucheinbindung an dem Stutzen vorgesehen. Es handelt sich um Einrichtungen zum Einbinden des Endes einer Schlauchleitung, um sie mittels des Leitungsanschlussteils, das z. B. ein Rohrstück oder ein Adapterstück sein kann, insbesondere an ein stationäres Behältnis oder eine Leitung anzuschließen.

Bekannte Einrichtungen zum Einbinden eines einfachen Schlauches weisen einen rohrförmigen Stutzen auf, der in den Schlauch gesteckt wird. Mittels z. B. mit Presshülse oder Klemmbacken ausgestatteter Klemmeinrichtung wird das aufgesteckte Schlauchende an dem Steckkörper des Stutzens festgesetzt. Am freien distalen Ende des Steckkörpers entstehen an der Innenwandung des Schlauches im Bereich des Strömungsquerschnitts ein Absatz, eine Wulst und/oder ein Spalt. Dadurch entsteht eine Störstelle im Strömungsweg von durch den Schlauch geleiteten Flüssigkeiten. Die Störstelle kann je nach Strömungsrichtung zu einem Strömungsschatten, einem Todbereich oder einer Strömungsablenkung von der Wandung und damit zu einer Einfangzone führen. Insbesondere beim Durchleiten von pharmazeutischen Flüssigkeiten oder Lebensmittel-Flüssigkeiten besteht die Gefahr eines Kontaminierens durchgeleiteter Flüssigkeit. Allgemein sind aseptische fluidtechnische Anwendungen betroffen. Die Folge ist eine Verschlechterung oder Verhinderung einer Selbstreinigungsfunktion, nämlich des sogenannten cip-Effekts (clean in process). Der Absatz oder die Wulst mit Spalt am Steckrand des Steckkörpers werden zum Herd für Verkeimungen und Verunreinigungen.

Schon kleinste Ritzen oder Spalte können zur Bakterienbildung und -vermehrung führen.

Bei einer der gattungsgemäßen Einrichtung entsprechenden, aus DE 695 13 931 T2 bekannten Einbindung eines Doppelschlauches in einen Flansch wird ein Förderschlauch an seinem Ende mit einem um 90° abgewinkelten Rand versehen, der mittels einer Gummidichtung gegen die Dichtfläche eines Leitungsanschlussteils geklemmt wird. Dadurch soll eine Einfangzone vermieden werden. Der Bereich der Abwinkelungskante in der Flanschverbindung bleibt jedoch einer Überbeanspruchung ausgesetzt. Die zusätzliche Gummidichtung beeinträchtigt den Bereich der Strömungs-Übergangsstelle. Dadurch können Risse, Spalte und Deformationen und in der Folge Verunreinigungen entstehen. Eine ausreichende Selbstreinigung kann an solchen Störstellen nicht stattfinden. Unter Vermeidung einer zusätzliche Gummidichtung ist vorgeschlagen worden, eine Verdickung an einer Übergangsstelle durch einen schrägen umlaufenden, einen Schlauchrand einklemmenden Dichtspalt zu vermeiden, der sich zur Übergangsstelle hin konisch aufweitet, um dort Klemmdruck zu reduzieren (FR 2 210 269). Die Einrichtung eines solchen Klemmspalts erfordert eine besonders angepasste, im kritischen Übergangsbereich reduzierte Pressung unter Berücksichtigung der Spaltgeometrie.

Danach liegt der Erfindung das Ziel zugrunde, die Einbinde-Stutzeneinrichtung und die Schlauchleitung so zu gestalten, dass im Bereich der Schlaucheinbindung optimale, Störungen der Strömung vermeidende Strömungsverhältnisse erreicht werden. Das Einbinden der Schlauchleitung soll dennoch mit einfachen Mitteln durchführbar sein. Insbesondere soll die Verbindungseinrichtung zum Einbinden von Schlauchleitungen zur Flüssigkeitsförderung bei sterilen, pharmazeutischen, biotechnischen, chemischen und lebensmittelbezogenen Anwendungen geeignet sein.

Ziele der Erfindung werden in Verbindung mit den Merkmalen der gattungsgemäßen Verbindungseinrichtung durch die kennzeichnenden Merkmale des Anspruches 1 erreicht.

Die Verbindungseinrichtung bzw. der Stutzen sind zum Einbinden der Doppelschlauchleitung ausgebildet, die den in der Doppelschlauchleitung innenliegenden Förderschlauch und den diesen tragenden außenliegenden Tragschlauch aufweist, aus dem der Förderschlauch am Schlauchleitungsende mit dem den wulstförmigen Anschlussrand aufweisenden Anschlussabschnitt hervorragt. In der stirnseitigen Stutzen-Anschlussfläche ist der dem Förderschlauch-Anschlussabschnitt zugeordnete Öffnungsrand mit der Anschluss-Randausnehmung ausgebildet ist, die den wulstförmigen Anschlussrand des Förderschlauchs in versenkter Anordnung zur dichtenden Form- und Kraftschlussverbindung mit dem Leitungsanschlussteil aufnimmt. Der Anschlussrand des Förderschlauchs ist zumindest im Wesentlichen außerhalb des Strömungsquerschnitts umlaufend ausgebildet, und er fasst in die Anschlussnut dichtend und klemmend ein, die zwischen dem Stutzenfuß und dem daran befestigten Leitungsanschlussteil in versenkter Anordnung in der Wandung der Verbindungseinrichtung ausgebildet ist. Der Anschlussrand ist zum Herstellen der Dicht- und Klemmverbindung zwischen dem Stutzen und dem Leitungsanschlussteil formgleich mit der zugeordneten Anschlussnut zwischen dem Stutzen und dem Leitungsanschlussteil ausgebildet.

Die Schlaucheinbindung ist derart, dass keine Teile oder Elemente der Stutzeneinrichtung an der Innenwandung des stromführenden Förderschlauchs angeordnet sind oder dort zur Anlage kommen. Mittels erfindungsgemäß versenkter Aufnahme des Förderschlauch-Anschlussrandes an der stirnseitigen Anschluss-Randausnehmung des Stutzenfußes wird gewährleistet, dass der Förderschlauch an seinem Ende absatz-, wulst- sowie spaltfrei an ein Leitungsanschlussteil der erfindungsgemäßen Verbindungseinrichtung angeschlossen werden kann.

Das Leitungsanschlussteil der erfindungsgemäßen Verbindungseinrichtung kann in jeder gewünschten dem Einsatzweck und/oder Ort angepassten Form gestaltet sein. Zum Beispiel wird es als Klemmflansch mit Anschweißende, als Anschluss-Adapterstück oder als anderes, Leitungen verbindendes Kupplungsstück ausgeführt. Die erfindungsgemäß mit wulstförmigem Anschlussrand an die erfindungsgemäße Verbindungseinrichtung angepasste Doppelschlauchleitung ist einfach in Struktur und wirksam in Funktion. Der außenliegende Tragschlauch nimmt Zug- und Druckkräfte der Schlauchverbindung auf. Der innenliegende Förderschlauch kann, da er infolge der Tragfunktion des Tragschlauchs von der Aufnahme von Druck-/Zug- und/oder Biegekräften im Wesentlichen entlastet ist, mit zu dem Außenschlauch sehr dünner Wandung kostengünstig bereitgestellt werden. Der Förderschlauch kann mit seinen Material- und Oberflächeneigenschaften an Erfordernisse durchzuleitender Strömungsmedien auf einfache Weise angepasst und dafür ausgelegt werden. Er kann mit besonders wirksamer glatter Innenwandung gebildet werden. Das Material der Schlauchwandung kann gewählt werden, um insbesondere einer chemischen Zersetzung gezielt zu widerstehen. Im Ganzen erreicht man mit den erfindungsgemäßen Maßnahmen beim Durchströmen der Verbindungs- und Stutzeneinrichtung in höchstem Maße Reinheit und sehr gute cip-Eigenschaft. Insbesondere werden zur Kontamination, insbesondere zu Verkeimungen von durchgeleiteten Flüssigkeiten führende Verunreinigungen vermieden. Dies eröffnet besonders vorteilhaft die Anwendung für aseptische fluidtechnische Anwendungen insbesondere im Bereich der Pharmazie, im Lebensmittelsbereich und auf biotechnischem Gebiet.

Die Randausnehmung des Stutzens ist mit einer an die Form des Förderschlauch-Anschlussrandes angepassten Formfläche ausgebildet ist, die derart angeordnet und ausgebildet ist, dass der Förderschlauch-Anschlussrand unter spitzem Winkel an der Stutzen-Anschlussfläche versenkt wird.

Die Verbindungseinrichtung mit der Stutzeneinrichtung, die eine Kupplungs-Baueinheit bildet, weist das an dem Stutzen-Anschlussfuß befestigte rohrförmige Leitungsanschlussteil mit der Stirnausnehmung auf, die in Korrespondenz mit der Randausnehmung des Stutzen-Anschlussfußes die Anschlussnut bildet, die zusammen mit dem in ihr versenkten Anschlussrand des Förderschlauches als Klemm- und Dichtnut wirkt.

Erfindungsgemäß weist die Anschlussnut eine gedachte, im Nutquerschnitt mittig durch sie hindurchgehende Richtungsachse auf, mit der die Anschlussnut unter spitzem Winkel gegenüber der Strömungsrichtung an den inneren Rohrumfangsabschnitt des Stutzen-Anschlussfußes am Öffnungsrand anschließt. Der dadurch erzielte Abbiegewinkel des Förderschlauch-Anschlussrandes wird besonders klein gehalten, und an kritischer Übergangsstelle erfolgt eine besondere Einfassung. Man vermeidet Materialrisse und -spalte, wie sie bei Bördelränder mit Abbiegewinkeln im Bereich von 90° entstehen.

Die Anschlussnut ist mit dem an den inneren Rohrumfangsabschniti anschließenden umlaufenden Öffnungsschlitz ausgebildet, dessen Schlitzbreite der Wandstärke des Förderschlauches entspricht. Die Gestaltung des Öffnungsschlitzes ist derart, dass er den an dem Anschlussteil ausgebildeten umlaufenden Rand aufweist, der im Querschnitt spitz zuläuft und zweckmäßig einen im Strömungsquerschnitt niveaugleichen Wandungsübergang zwischen dem Leitungsanschlussteil und dem Förderschlauch herstellt. Man erreicht eine besonders wirksame Klemmeinfassung in dem Kantenbereich, in dem der Förderschlauch-Anschlussrand am Ende des Förderschlauches aus gerader Richtung abwinkelt.

Die Anschlussnut lässt sich besonders gestalten, um vorteilhaft eine besonders einfache und wirksame Dichtverbindung, die einen störungsfreien Strömungsübergang gewährleistet, zwischen dem Stutzenfuß und dem Leitungsanschlussteil herzustellen. Zweckmäßig ist die Anschlussnut zum Ausüben von Klemmkraft auf den Förderleitungs-Anschlussrand mit einem Querschnitt ausgebildet, der im unverpressten Zustand kleiner als der Querschnitt des Förderleitungs-Anschlussrandes ist.

Besonders vorteilhaft kann die Anschlussnut mit sich verengendem, vorzugsweise keilförmigem Querschnitt derart ausgebildet sein, dass eine den Anschlussrand der Förderleitung unverlierbar haltende Einfassung gebildet ist. Vorzugsweise verjüngt sich der Förderschlauch-Anschlussrand zu dem inneren Stutzen-Öffnungsrand hin, und er ist zweckmäßig im Querschnitt trapezförmig gestaltet. Es wird eine den Förderschlauch-Anschlussrand unverlierbar haltende Einfassung gebildet.

Eine besonders vorteilhafte Maßnahme besteht darin, dass der Stutzen-Anschlussfuß einen zur Anlage an den Förderschlauch kommenden Innenumfang aufweist, der gegenüber dem den Leitungsquerschnitt bestimmenden Innenumfang des rohrförmigen Leitungsanschlussteils, der an der Stelle der Anschlussnut anschließt, in einem der Wanddicke des Förderschlauchs entsprechendem Maß zurückspringt. Zweckmäßig wählt man den Strömungsquerschnitt des Leitungsanschlussteils gleich dem Strömungsquerschnitt des Förderschlauchs.

In bevorzugter Gestaltung wird die Anschlussnut zwischen dem Leitungsanschlussteil und dem Stutzenfuß derart ausgebildet, dass in der erfindungsgemäßen Verbindungseinrichtung der Förderschlauch-Anschlussrand vollständig in der Wandung der beiden Teile versenkt ist. Insbesondere diese Gestaltung erlaubt besonders wirksame Maßnahmen zur Dichtung und mechanischem Fixierung des Anschlussrandes. In bevorzugter Gestaltung werden die Querschnitte durch eine Verengung der Anschlussnut und eine Erweiterung des Anschlussrandes in diesem Bereich so gestaltet, dass im Bereich der Anlenkung des Anschlussrandes an dem Ende des Förderschlauches in der Anschlussnut eine besonders ausgeprägte Klemm- und Dichtpressung erzeugt wird.

Eine vorteilhafte ausgestaltende Maßnahme besteht darin, dass sich die Anschlussnut und der Anschlussrand mit entsprechenden Formquerschnitt in das Leitungsanschlussteil hinein erweitern. In dieser Gestaltung sind die Formquerschnitte zweckmäßig keilförmig, wobei der Anschlussrand einen Keilwinkel aufweist, der kleiner als der Keilwinkel der Anschlussnut ist. Allgemein erreicht man mit einem Querschnitt des Anschlussrandes, der größer als der Querschnitt der Anschlussnut ist, und mit der genannten Querschnittserweiterung nach außen, dass der Anschlussrand in der Anschlussnut besonders zuverlässig unverlierbar eingefasst wird. Man erzielt in dem kritischen Übergangsbereich zwischen dem Schlauchstutzen und dem Leitungsanschlussteil eine besonders große und wirksame Klemmkraft sowie eine vollständige Dichtfüllung der Anschlussnut. Dadurch ist jeder Spalt vermieden, so dass einem Eindringen von Keimen in besonderem Maß entgegengewirkt wird. Ein weiterer zusätzlicher, besonders vorteilhafter Effekt kann darin bestehen, dass die Dichtwirkung in der vollständig mit dem Anschlussrand ausgefüllten Anschlussnut mit steigender Betriebstemperatur bei der Verwendung der Einrichtung größer wird. Allgemein wird der Anschlussrand des Förderschlauches bzw. der Förderschlauch zweckmäßig aus einem Material hergestellt, das zur Dichtung ausreichend fest und in geeignetem Maß federelastisch ist.

Um den Innen-Förderschlauch in seinem Anschlussbereich optimal zu halten und zu führen, weist der Stutzen vorteilhaft einen inneren Rohrumfangsabschnitt auf, der durchgehend von der Anschluss-Randausnehmung bis zu dem distalen Steckende des Steckkörpers an den Außenumfang des Förderschlauchs angepasst ist. Zum Herstellen eines fluchtenden Durchgangs mit störungsfrei ineinandergehenden Wandungen der Teile der Verbindungseinrichtung ist diese vorteilhaft dadurch gestaltet, dass der Außendurchmesser des Förderschlauches zumindest im Wesentlichen gleich dem Innendurchmesser des rohrförmigen Steckkörpers des Stutzens ist und dass der Innendurchmesser des Tragschlauchs zumindest im Wesentlichen gleich dem Außendurchmesser des Förderschlauches ist. Der Tragschlauch ist im Bereich des Stutzenkörpers im Steckquerschnitt derart aufgeweitet, dass der Steckkörper mit flach ausgebildeter Steckwand formschlüssig zwischen den Tragschlauch und den Förderschlauch einfasst.

Um den Förderschlauch weitgehend von Kräften zu entlasten, die von dem Tragschlauch aufgenommen werden, ist es besonders vorteilhaft und zweckmäßig, dass der Förderschlauch wenigstens im Bereich der Einbinde-Stutzeneinrichtung lose in dem Tragschlauch sitzt.

Die Erfindung sieht besondere ausgestaltende Maßnahmen für eine mehrteilige Ausbildung des wulstförmigen Abschlussrandes vor. Zweckmäßig können wenigstens zwei Anschlusswandteile in der Anschlussnut so angeordnet, aneinandergefügt und vorteilhaft durch Klemm- und Dichtwirkung beeinflussende Materialunterschiede aufeinander abgestimmt sein, dass dadurch in dem Bereich des Anschlussrandes, der unmittelbar an die Strömungswandung des Förderschlauches anschließt, eine Klemm- und Dichtpressung bewirkt ist, die in dem korrespondierenden Teil der Anschlussnut größer als die Klemm- und Dichtpressung in dem übrigen Teil der Anschlussnut ist.

Besonders vorteilhaft weist der Förderschlauch-Anschlussrand wenigstens einen unmittelbar an die Strömungswandung des Förderschlauches anschließenden inneren Basis-Anschlussrandteil und wenigstens einen den inneren Anschlussrandteil umgebenden äußeren Anschlussrandteil auf, der vorzugsweise derart klemmelastisch ausgebildet ist, dass er in stärkerem Maß als der innere Anschlussteil zur Dicht- und Klemmpressung beiträgt. Um Klemmkraft an der Übergangsstelle zwischen dem Stutzen und dem Leitungsanschlussteil besonders zu konzentrieren, weist wenigstens ein äußerer Förderschlauch-Anschlussrandteil sich im Querschnitt zum stirnseitigen Anschlussrandende hin erweiternde Form, zweckmäßig Trapezform oder trapezähnliche Form auf.

Zweckmäßig weist die Anschlussnut einen kammerartigen Raum auf, der an der Stutzenanschlussfläche ausgebildet ist und wenigstens einen Teil des äußeren Anschlussraumes mit wenigstens einer den äußeren Anschlussteil formschlüssig einfassenden Profilfläche bildet.

Eine bevorzugte Gestaltung besteht darin, dass ein erster der Anschlussrandteile, die vereinigt sind, einen Basisrandteil bildet, der durch einen sich trichterartig öffnend geformten Endabschnitt der Förderschlauch-Wandung gebildet ist, und dass wenigstens ein zweiter der Anschlussrandteile durch einen den Basisrandteil umgebenden Anschlussrandteil gebildet ist. Gemäß einer besonders bevorzugten und vorteilhaften Gestaltung ist wenigstens ein zweiter der Anschlussrandteile durch einen an den Basisrandteil ansetzbaren, ihn umgebenden Modulteil gebildet. Eine formschlüssige Vereinigung der Anschlussrandteile wird vorzugsweise unter Nutzung einer Zahnung oder Wellung an der Förderschlauch-Oberfläche hergestellt. Es kann eine Rastverbindung ausgebildet werden. Dies eröffnet die Möglichkeit, im Handel erhältliche Förderschläuche mit Zahnung, Wellung oder dergleichen auf eine gewünschte Länge abzulängen und am Schlauchende einen äußeren Anschlussrandteil, der den Modulteil bildet, mit komplementärem Profil auf den Basisrandteil aufzusetzen, um den wulstförmigen Anschlussrand zu bilden. Insbesondere lassen sich herkömmliche Förderschläuche aus PFA (Perfluoralkoxy-Polymerharz) oder PTFE (Polytetrafluorethylen) nutzen, also allgemein aus Materialien, die nicht oder kaum elastisch sind. Hingegen kann man wenigstens einen angefügten äußeren Anschlussrandteil aus zum Klemmen und Dichten besonders geeignetem elastischem Material, zum Beispiel aus EPDM (Ethylen-Propylen-Dien-Kautschuk) herstellen.

Eine besondere Ausgestaltung besteht auch darin, einen Anschlussrandteil, der zweckmäßig als genannter Modulteil vorgesehen ist, mit einem Ringelement, vorzugsweise in Form eines dichtenden elastischen O-Rings, der zum Beispiel aus EPDM gefertigt ist, zusammenzufügen, wobei das Ringelement bevorzugt so angeordnet ist, dass es im Bereich eines Öffnungsschlitzes der Anschlussnut zur Dicht-/Pressanlage gegen den inneren Stutzen-Öffnungsrand sowie die Förderschlauchwandung an der Übergangsstelle gelangt.

Insbesondere in Verbindung mit der genannten sandwichartigen (mehrteiligen) Fügestruktur des wulstförmigen Anschlussrandes, aber auch zur Aufnahme von anderen wulstförmigen Anschlussrändern sieht die Erfindung besondere Ausgestaltungen für die Anschlussnut bzw. für Form-/Profilflächen derselben vor. Eine Ausgestaltung besteht darin, dass an der Stutzen-Anschlussfläche eine Profilfläche ausgeformt ist, die für einen Teil des Förderschlauch-Anschlussrandes einen Aufnahmeraum bildet, vorteilhaft in Form einer Eckaufnahme für einen Förderschlauch-Anschlussrand, der sich vorzugsweise zu dem inneren Stutzen-Öffnungsrand hin verjüngt und zweckmäßig im Querschnitt trapezförmig gestaltet ist. Eine Ausgestaltung besteht auch darin, dass wenigstens eine Anschlussnut-Profilfläche durch eine Ring-Vertiefungsfläche für einen umlaufenden elastischen, vorzugsweise als O-Ring geformten Dichtungsteil des Förderschlauch-Anschlussrandes gebildet ist. Vorteilhaft werden die Winkel-Profilfläche und/oder die Ring-Profilfläche so an der Anschlussfläche des Stutzens ausgebildet, dass diese Flächen wenigstens teilweise gegenüber dem inneren Öffnungsrand des Stutzenanschlussfußes an der Stutzenanschlussfläche zurückspringen. Man erreicht damit, dass ein Teil der an dem Stutzenanschlussfuß ausgebildeten Anschlussnut hinter die Querschnitts-/Radialebene zurückgreift, in der der Strömungsquerschnitt des Förderschlauches an der Übergangsstelle zwischen dem Stutzen und dem Leitungsanschlussteil offen ist.

Eine Ausgestaltung besteht darin, dass der Förderschlauch-Anschlussrand wenigstens einen unmittelbar an die Strömungswandung des Förderschlauches anschließenden inneren Anschlussrandteil und wenigstens einen den inneren Anschlussrandteil umgebenden äußeren Anschlussrandteil aufweist, der derart klemmelastisch ausgebildet ist, dass er in stärkerem Maß als der innere Anschlussrandteil zur Dicht- und Klemmpressung beiträgt. Zweckmäßig kann wenigstens ein äußerer Anschlussrandteil sich im Querschnitt zum stirnseitigen Anschlussrandende hin erweiternde Trapezform oder trapezähnliche Form aufweisen. Insbesondere kann vorgesehen werden, dass wenigstens ein äußerer Anschlussrandteil mit einem an einer Formfläche des Stutzens anliegenden Teil hinter das Ende der Strömungswandung des Förderschlauches zurückgreift.

Unteransprüche sind auf die genannten und noch andere zweckmäßige und vorteilhafte Ausgestaltungen der Erfindung gerichtet. Besonders zweckmäßige und vorteilhafte Ausführungsformen oder -möglichkeiten der Erfindung werden anhand der folgenden Beschreibung der in der schematischen Zeichnung dargestellten Ausführungsbeispiele beschrieben. Es zeigen
- Fig. 1: im mittigen Längsquerschnitt ein Ausführungsbeispiel einer erfindungsgemäßen Verbindungseinrichtung mit Stutzeneinrichtung und Doppelschlauch,
- Fig. 2: das Detail B in Fig. 1,
- Fig. 3: eine Verdeutlichung zu dem Detail B der Fig. 2 und
- Fig. 4 bis 6: in der Fig. 2 entsprechender Detailansicht weitere Ausführungsbeispiele.

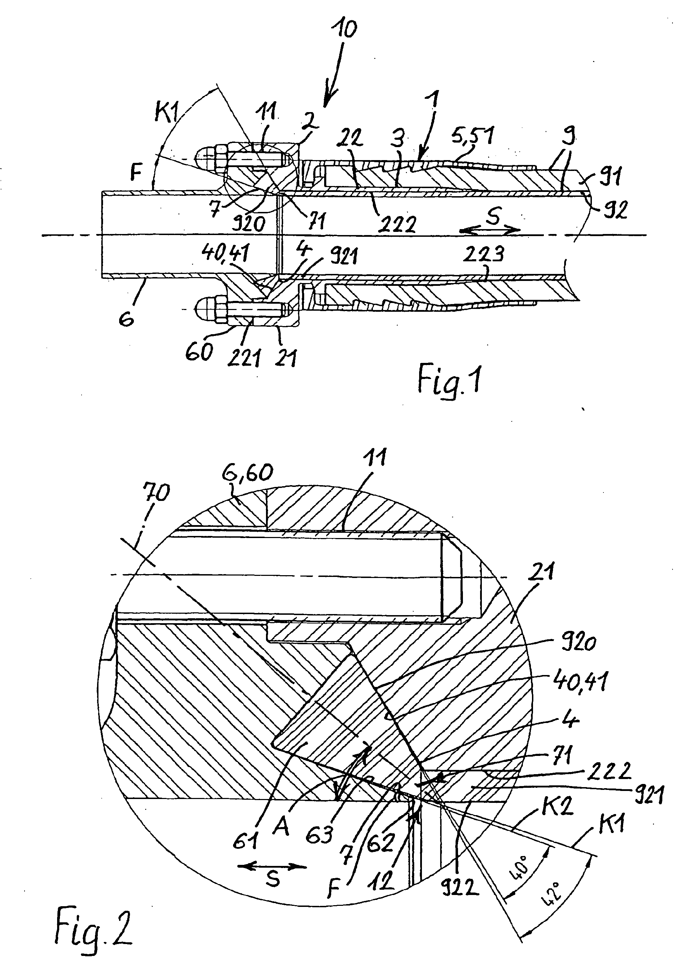

Gemäß Fig. 1 weist eine erfindungsgemäße Stutzeneinrichtung 1 einen Stutzen 2 mit Stutzenanschlussfuß 21 und Stutzensteckkörper 22 auf. An dem Öffnungsrand 4 der Stutzenanschlussfläche 221 ist eine besondere, eine Formfläche 40 aufweisende Anschluss-Randausnehmung 41 ausgebildet.

Die Stutzeneinrichtung 1 ist Bestandteil einer erfindungsgemäßen Verbindungseinrichtung 10. Diese bindet eine angepasste erfindungsgemäße Schlauchleitung 9 in Form eines Doppelschlauchs zwischen dem Stutzen 2 und einem Leitungsanschlussteil 6 ein. Das Leitungsanschlussteil 6, das zum Beispiel ein Rohrstück oder ein Adapterstück ist, mit dem die Schlauchleitung 9 zu verbinden ist, weist einen Anschlussflansch 60 auf, in dessen Stirnfläche eine Stirnausnehmung 61 ausgebildet ist. Der Stutzenanschlussfuß 21 und der Anschlussflansch 60 bilden eine mit Schraubenverbindungen 11 hergestellte Flanschverbindung.

Die Anschluss-Randausnehmung 41 und die Stirnausnehmung 61 bilden eine umlaufende, erfindungsgemäß besonders ausgebildete und angeordnete Anschlussnut 7 mit einem umlaufenden Öffnungsschlitz 71 an der inneren Übergangsstelle 12 zwischen dem Stutzenanschlussfuß 21 und dem Leitungsanschlussteil 6.

Der Doppelschlauch weist einen außenliegenden Tragschlauch 91 und einen diesen auskleidenden innenliegenden Förderschlauch 92 auf. Zum Beispiel ist der Tragschlauch 91, der den Förderschlauch 92 trägt, in bekannter Weise durch einen Elastomer-Schlauch oder einen Edelstahl-Geflechtschlauch gebildet. Ein solcher Schlauch mit relativ dicker Wandung ist besonders auf Druck-, Zug- und Biegekräfte beanspruchbar.

Der Förderschlauch 92 ragt mit einem Anschlussabschnitt 921 aus dem Tragschlauch 91 hervor. Der Anschlussabschnitt 921 ist so lang ausgebildet, dass er in dem Stutzen 2 einen Abschnitt vom Ende des Tragschlauches 91 bis zu dem Öffnungsrand 4 am Stutzenanschlussfuß 21 überbrückt. An dem Ende des Förderschlauches 92 ist ein Anschlussrand 920 ausgebildet, der durch einen wulstförmigen, in der Einbindung außerhalb des Schlauch-Strömungsquerschnitts umlaufenden Dicht- und Klemmrand gebildet ist.

An der Stutzeneinrichtung 1 sind voneinander getrennte Mittel ausgebildet, um einerseits den Tragschlauch 91 und andererseits den Förderschlauch 92 an dem Stutzen 2 in formschlüssigen Aufnahmen einzubinden bzw. in der Verbindungseinrichtung 10 zu befestigen. Der Tragschlauch 91 ist in an sich bekannter Weise mittels einer Klemmeinrichtung 5 eingebunden, die im Ausführungsbeispiel eine Presshülse 51 umfasst, die über den Stutzen-Steckkörper 22 fasst, wodurch das Ende des Tragschlauches 91 in Form- und Kraftschluss zwischen den beiden Teilen befestigt ist. Anstelle der Presshülse 51 kann jede geeignete andere Verbindung zum Beispiel mit Klemmbacken oder -schalen vorgesehen sein.

Der Förderschlauch 92 hingegen ist dadurch befestigt, dass der Anschlussrand 920 dichtend und klemmend von der Anschlussnut 7 bei zusammengeschraubter Flanschverbindung aufgenommen wird. Selbstverständlich kann die Flanschverbindung mit jeder geeigneten Klemmverbindung, zum Beispiel mittels Überwurfmutter ausgeführt werden.

Erfindungsgemäß kommt es insbesondere darauf an, Kanten, Spalte, Erhebungen im Strömungsquerschnitt an der Übergangsstelle 12 zwischen der Schlauchleitung 9 bzw. dem Förderschlauch 92 und dem Leitungsanschlussteil 6 weitgehend auszuschließen. Im Ausführungsbeispiel weist der Förderschlauch 92 den gleichen Strömungs-Kreisquerschnitt wie das Leitungsanschlussteil 6 auf. Der Förderschlauch 92 und das Leitungsanschlussteil 6 gehen an ihrer Berührungsstelle fluchtend ineinander über. Der Förderschlauch 92 sitzt mit seinem kreisförmigen Außenquerschnitt formschlüssig lose in dem Tragschlauch 91. Der innere Rohrumfangsabschnitt 222 des Stutzens 2 stimmt mit dem Außenquerschnitt des Förderschlauches 92 überein. Der Stutzen-Steckkörper 22 ist ein flachwandiges Rohr-Steckteil, das den Tragschlauch 91 im Steckabschnitt zwischen spitz zulaufendem distalem Steckende 223 und der Schlauchöffnung längs der Klemmfläche 3 geringfügig elastisch im Querschnitt aufweitet.

Die genannte fluchtende Ausbildung und Anordnung im Strömungsquerschnitt entsteht dadurch, dass der Stutzen-Anschlussfuß 21 einen zur Anlage an den Förderschlauch 92 kommenden Innenumfang aufweist, der an der Stelle des Öffnungsschlitzes 71 der Anschlussnut 7 gegenüber dem den Leitungsquerschnitt bestimmenden Innenumfang des Leitungsanschlussteils 6 in einem der Wanddicke des Förderschlauches 92 entsprechenden Maß erweiternd zurückspringt.

Die Schlitzbreite des Öffnungsschlitzes 71 entspricht der Wandstärke des Förderschlauches 92. Genauer gesagt, ist sie etwas kleiner als die oder zumindest im Wesentlichen gleich der Wandstärke. Dabei weist der Öffnungsschlitz 71 einen an dem Anschlussteil 6 ausgebildeten umlaufenden Rand 62 auf, der im Querschnitt unter flachem Winkel F gegenüber der Strömungsrichtung S spitz zuläuft und damit einen im Strömungsquerschnitt niveaugleichen Wandungsübergang zwischen dem Leitungsanschlussteil 6 und dem Förderschlauch 92 herstellt. Der Winkel F beträgt vorteilhaft ca. 20°. Wie insbesondere aus Fig. 2 ersichtlich, geht die Strömungswandung 922 unter entsprechend flachem Winkel in die an der Nutfläche 63 anliegende Anschlussrandfläche über.

Erfindungsgemäß kommt der Anschlussnut 7 mit ihrem Öffnungsschlitz 71 besondere Bedeutung zu. Die Anschlussnut 7 ist durch eine den Anschlussrand 920 form- und kraftschlüssig sowie unverlierbar einfassende Kammer gebildet, die im Querschnitt keil- und trapezförmig ist. Die Anschlussnut 7 weitet sich, ausgehend von dem Öffnungsschlitz 71, keilförmig unter einem Keilwinkel K1 auf. Sie befindet sich in vollständig versenkter Anordnung zwischen dem Anschlussflansch 60 und dem Stutzenanschlussfuß 21. Die Anschlussnut 7 ist im Querschnitt betrachtet mit einer gedachten mittleren Achse70 im spitzen Winkel A gegenüber der Strömungs- bzw. Leitungsrichtung S ausgerichtet. Entsprechend dem Ablenkwinkel A weist der umlaufende spitze Rand 62 eine unter dem flachen Winkel F verlaufende Innenfläche 63 der Anschlussnut 7 auf. Die freie Seite des Anschlussrandes 920 des Förderschlauches 92 liegt am Boden 72 der Anschlusnut 7 an.

Mit dem gleichen Richtungs- bzw. Ablenkwinkel A ist der Anschlussrand 920 des Förderschlauches 92 ausgebildet oder angeformt. Das heißt, dass der Anschlussrand 920 des Förderschlauchs 92 so ausgebildet ist, dass er jedenfalls frei von Materialüberdehnung oder -beanspruchung, die zur Bildung von Rissen führen könnten, nach außen abbiegbar ist. Im Ausführungsbeispiel kommen die Anschlussnut 7 mit dem Öffnungsschlitz 71 und der korrespondierende Anschlussrand 920 vollständig außerhalb des Strömungsquerschnitts an der Übergangsstelle 12 zwischen dem Förderschlauch 92 und dem Leitungsanschlussteil 6 zu liegen.

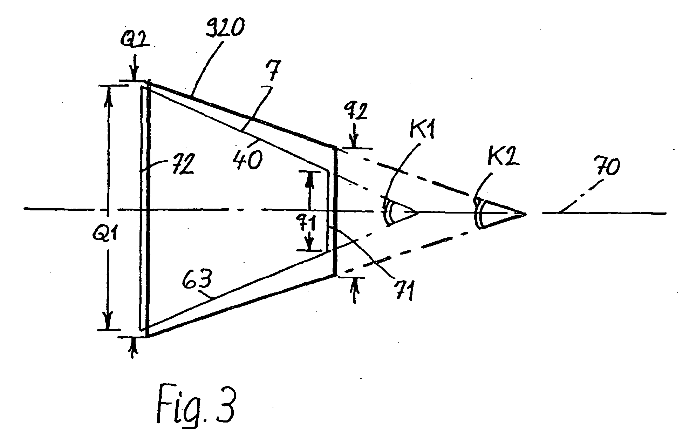

Die Formgleichheit des Anschlussrandes 920 mit der Anschlussnut 7 ist dahingehend zu verstehen, dass der Anschlussrand 920 einen Keilwinkel K2 aufweist, der zwar dem Keilwinkel K1 der Anschlussnut 7 entspricht, der aber zum Beispiel mit ca. 2° geringfiigig kleiner als der Keilwinkel K1 ist. Dies ist aus Fig. 2 ersichtlich und in Fig. 3 zur Verdeutlichung besonders dargestellt. Im Beispiel betragen die Winkel K1 und K2 vorteilhaft ca. 42° bzw. 40°. Dadurch erreicht man, dass der Anschlussrand 920 des Förderschlauchs 92 in besonderem Maß im Bereich des Öffnungsschlitzes 71 in die Anschlussnut 7 eingepresst ist und diese vollständig zum dichtenden Anschluss des Anschlussflansches 60 an den Stutzenanschlussfuß 21 ausfüllt, wenn die Flanschverbindung mit den Schraubenverbindungen 11 hergestellt ist. Die Dimensionierung der Keilquerschnitte relativ zueinander ist also derart, dass die größte Materialpressung im Bereich des Öffnungsschlitzes 71 an dem Förderschlauch 92 erzeugt wird. Damit ist sichergestellt, dass an der besonders kritischen Übergangsstelle 12 sowohl Wulstbildung, als auch Bildung feinster Spalte ausgeschlossen werden.

Die Orientierung der Anschlussnut 7 bzw. des Anschlussrandes 920 unter dem Ablenkwinkel A und die Keilform resultieren aus den Orientierungen der Formfläche 40 an dem Stutzenanschlussfuß 21 und der nutseitigen Fläche 63 des umlaufenden spitzen Randes 62 des Leitungsanschlussteils 6. Diese Flächen mit den beschriebenen Orientierungen erzeugen eine besonders günstige, den Formsitz nicht beeinträchtigende Pressung an dem Anschlussrand 920 in der Anschlussnut 7. Die Formfläche 40 ist durch die Anschluss-Randausnehmung 41 ausgebildet.

Wie aus Fig. 1 und 2 ersichtlich, weist die Anschlussnut im Klemmquerschnitt einen Trapezquerschnitt auf, der durch den Nutboden 72 und den Öffnungsschlitz 71 und den unter dem Keilwinkel K1 verlaufenden Nutflächen 40 und 63 bestimmt ist. Der im Querschnitt in Form eines Pfeifenkopfes an dem Ende des Förderschlauches 92 nach außen hervorstehende Anschlussrand 920 weist im unverpressten, nicht geklemmten Zustand den Keilwinkel K2 auf, der kleiner ist als der Keilwinkel K1 der Anschlussnut 7. Die dadurch im Bereich des Öffnungsschlitzes 71 besonders ausgeprägte Klemm- und Dichtpressung ist in Fig. 2 durch eine geringfügige Überdeckung des Anschlussrandes 920 und der Anschlussnut 7 in diesem Bereich mit den daraus resultierenden unterschiedlichen Keilwinkeln K1 und K2 dargestellt. Fig. 3 dient dazu, die örtlichen und geometrischen Verhältnisse in überdimensionierter Darstellung im Querschnittsbereich der Anschlussnut 7 zu verdeutlichen. Die Anschlussnut 7 und der Anschlussrand 920 sind in Überdeckung dargestellt, wobei der materialelastische, beim Einklemmen Rückstellkraft erzeugende Anschlussrand 920 im entspannten, nicht geklemmten Zustand dargestellt ist. Während das bodenseitige Querschnittsmaß Q2 des Anschlussrandes 920 im Wesentlichen gleich dem Querschnittsmaß Q1 an dem Nutboden 72 ist, ist das Querschnittsmaß q2 des Anschlussrandes 920 im Bereich des Öffnungsschlitzes 71 aufgrund des kleineren Keilwinkels K2 signifikant und überproportional größer als das die Breite des Öffnungsschlitzes 71 bestimmende Querschnittsmaß q1 der Anschlussnut 7. Daraus resultiert die wesentliche und besondere Pressung des Anschlussrandes 920 in der Anschlussnut 7 im Bereich des Öffnungsschlitzes 71. Man erreicht erfindungsgemäß den besonderen Pressdruck auf den Anschlussrand 920 in dem funktionskritischen Bereich der Randabknickung. In jedem Fall trägt dazu die zur Strömungs-/Leitungsrichtung S unter dem Winkel F schräge Klemm-/Dichtfläche 63 bei, die den erfindungsgemäß abgewinkelten und gestauchten wulstartigen Verdickungs- und Anschlussrand 920 aufnimmt.

Wenngleich sich die beschriebene keilförmige Nut-/Federverbindung der Anschlussnut 7 und des Anschlussrandes 920 als besonders vorteilhaft erweist, so erlaubt die Erfindung aber auch andere geeignete Nut-/Federquerschnitte. Insbesondere können der Förderschlauch-Anschlussrand und die Anschlussnut Kreisquerschnitt aufweisen. Auch dann kommt es darauf an, dass der Anschlussrand im Presssitz in die Anschlussnut 7 eingefugt ist und die Anschlussnut sowie der Förderschlauch-Anschlussrand unter spitzem Ablenkwinkel A in das Leitungsanschlussteil 6 hinein derart ausgerichtet sind, dass der Anschlussrand jedenfalls weitgehend in der Anschlussnut zwischen dem Stutzenanschlussfuß und dem Leitungsanschlussteil 6 versenkt ist.

Mit der formschlüssigen losen Anordnung des Förderschlauches 92 in dem Tragschlauch 91 erreicht man, dass das Einbinden des Förderschlauches 92 vollkommen getrennt von dem Einbinden des Tragschlauches 91 erfolgt. Während die Schlauchleitung 9 mittels des Tragschlauches 91 an die Klemmeinrichtung 5 mit der Presshülse 51 und der Klemmfläche 3 des Stutzen-Steckkörpers angeschlossen ist, wird der Förderschlauch 92 an seinem Rand mittels der erfindungsgemäßen versenkten Anschlussnut 7 in Dicht-/Klemmverbindung befestigt, und zwar nur an seinem Ende. Zwischen der Außenwandung des Förderschlauches 92 und der Innenwandung des Tragschlauches 91 sowie dem inneren Rohrstutzenabschnitt 222 ist eine kraftschlüssige Verbindung in dem Maße vermieden, dass zwischen dem Tragschlauch 91 und dem Förderschlauch 92 insbesondere im Betrieb der Schlauchleitung 9 keine ungünstige Zug- oder Druckspannung auf die erfindungsgemäße Verbindung an der Anschluss-/Übergangsstelle 12 entsteht. Dadurch wird die Anschluss-/Übergangsstelle 12 im dynamischen Zustand der Schlauchleitung 9 zusätzlich entlastet.

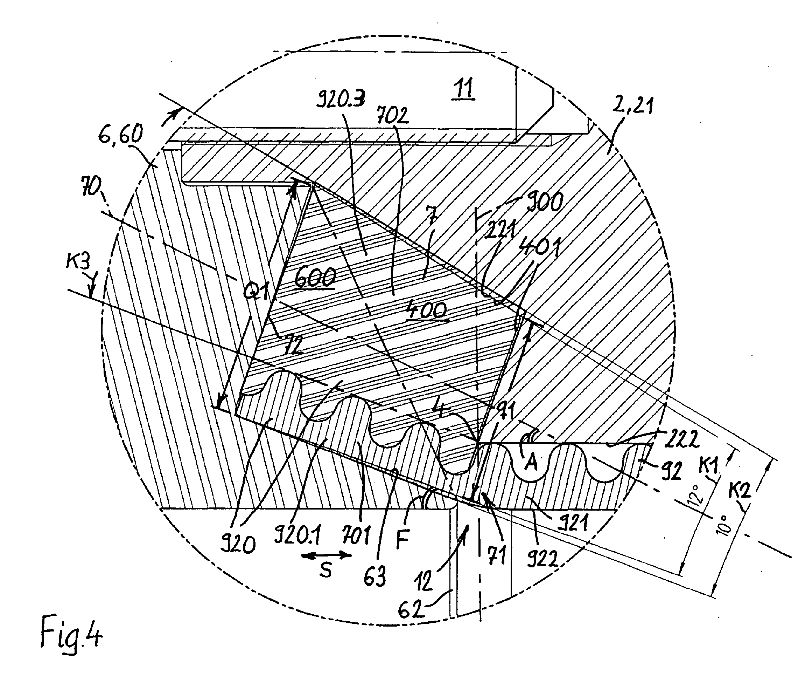

Detaildarstellungen von Ausführungsbeispielen gemäß Fig. 4 bis 6 entsprechen der Detaildarstellung in Fig. 2. Hinsichtlich ihrer Funktion und/oder Anordnung entsprechende oder ähnliche Teile sind mit übereinstimmenden Bezugszeichen versehen worden, ebenso gleiche Teile.

Eine gemäß Fig. 4 im Ausschnitt dargestellte erfindungsgemäße Verbindungseinrichtung weist eine im Querschnitt schwach-keilförmige trapezförmige Anschlussnut 7 mit Querschnittsmaße q1 und Q1 bestimmenden parallelen Grundlinien auf. Die trapezförmige Anschlussnut 7 ist entsprechend einer nachstehend beschriebenen sandwichartigen Struktur eines wulstförmigen Anschlussrandes 920 eines Fördcrschlauches 92 in einen im Querschnitt flachen Ring-Basisraum 701 und einen diesen umgebenden äußeren Modul-Anschlussraum 702 unterteilt. Der Anschlussraum 702 weist einen um den flachen Rechteckquerschnitt des Basisraums 701 kleineren Trapezquerschnitt als die gesamte Anschlussnut 7 auf. Der flache Basisraum 701 ist stutzenseitig durch einen umlaufenden Öffnungsschlitz 71 offen.

Eine Besonderheit des Ausführungsbeispiels gemäß Fig. 4 besteht darin, dass der Anschlussrand 920 des Förderschlauches 92 zweiteilig ausgebildet ist. Der Förderschlauch 92 weist eine Wandung auf, die innen glatt und außen gewellt oder gerippt ist. Die gewellte Wandung ist durch den Öffnungsschlitz 71 hindurchgesetzt. Die durch die Wellungshöhe bestimmte Wandungsstärke ist geringfügig größer oder zumindest im Wesentlichen gleich der Schlitzbreite. Der Förderschlauch 92 weist einen sich an die Strömungswandung 922 des Förderschlauchs 92 anschließenden Endabschnitt auf, der sich im Querschnitt trichterartig öffnet. Zum Beispiel kann der Förderschlauch 92 durch Abwinklung am inneren Öffnungsrand 4 des Stutzenanschlussfußes 21 in diese Form gebracht werden. Der trichterförmige Wandabschnitt, der im Ausführungsbeispiel einstückig mit der Strömungswandung 922 ist, bildet einen Randteil 920.1 des Anschlussrandes 920 und ist so bemessen, dass er in dem Basisraum 701 der Anschlussnut 7 aufgenommen wird.

Auf den Anschlussrandteil 920.1 ist ein äußeres ringförmiges Anschlussrandteil 920.3 formschlüssig aufgesetzt. Zu diesem Zweck weist das äußere Randanschlussrandteil 920.3 eine Wellung oder Rippung auf, die zur Außenwellung des Förderschlauches 920 komplementär ist. Zum Beispiel ist es auch denkbar, dass der äußere Anschlussrandteil 920.3 auf den Anschlussrandteil 920.1 aufgeschraubt, also eine Gewindeverbindung hergestellt wird. In jedem Falls ist der äußere Anschlussrandteil 920.3 in Form eines Modulteils, im Ausführungsbeispiel in Rastverbindung, mit dem Anschlussrandteil 920.1 zusammengefügt. Der Anschlussrandteil 920.3 nimmt im Wesentlichen den Raum 702 der Anschlussnut 7 ein.

Ähnlich wie bei dem Ausführungsbeispiel gemäß Fig. 1 bis 3 ist der Gesamtquerschnitt des Anschlussrandes 920 geringfügig größer als der entsprechende Querschnitt der Anschlussnut 7. Dies ist dadurch erreicht, dass sich der Trapezquerschnitt der Anschlussnut 7 unter einem etwas größerem Keilwinkel K1 - im Ausfiihrungsbeispiel 12° - öffnet, als der Trapezquerschnitt des Anschlussrandes 920 mit dem Keilwinkel K2, der im Ausführungsbeispiel 10° beträgt. Entsprechend weist der Anschlussrandteil 920.3 einen Trapezquerschnitt mit einem Keilwinkel K3 auf, der kleiner als der Keilwinkel K1 bzw. etwa gleich dem Keilwinkel K2 ist. Die Winkelangaben zu K2 und K3 beziehen sich auf den zusammengefügten, jedoch nicht-geklemmten Zustand des Wulst-Anschlussrandes 920.

Die trichterartige Aufweitung entspricht wie bei dem Beispiel der Fig. 2 dem Schrägwinkel F der Klemm-/Dichtfläche 63 des Anschlussflansches 60. Die Mittenachse 70 des Anschlussrandes 920 ist in Querschnittdarstellung unter dem spitzen Winkel A gegenüber der Strömungs-/Leitungsrichtung S ausgerichtet. Der Winkel A beträgt im Ausführungsbeispiel ca. 25°.

Aus Fig. 4 ist ersichtlich, dass die Anschlussnut 7 auch in Ring-Teilräume oder -Teilkammern 400 und 600 unterteilt ist, die im Querschnitt dreieckförmig sind. Der Raum 400 ist, im Querschnitt betrachtet, durch eine an der Anschlussfläche 221 des Stutzens 2 eine stirnseitige Vertiefung bildende Winkel-Profilfläche 401 begrenzt, die eine Eckaufnahme des Anschlussrandes 920 bzw. des Teiles 920.3 bildet. Diese Eckaufnahme in der Stutzen-Anschlussfläche 221 springt hinter die Radialebene (Öffnungsebene) 900 zurück, in der der Förderschlauch 92 an dem inneren Öffnungsrand 4 offen ist. Infolgedessen greift ein umlaufender Abschnitt des Teiles 920.3 hinter das Ende der Strömungswandung 922 der Förderschlauches 92 zurück. Man erreicht damit, dass der Randanschlussteil 920.3 als Klemmteil oder Schubmodulteil durch Zusammenwirken mit der Schrägfläche 63 in verstärktem Maß Dicht-/Klemmpressung an dem Anschlussrand 920 im Bereich des Nutschlitzes 71 an der Übergangsstelle 12 bewirkt. Dort, wo die Strömungswandung 922 des Förderschlauches 92 an die Nase des umlaufenden Randes 62 angrenzt, wird mit wesentlicher Komponente in Radialrichtung eine besonders starke Verpressung des Anschlussrandes 920 quer zur Axialrichtung des Förderschlauches 92 erzielt.

Der Kammerraum 600 ist, im Querschnitt betrachtet, durch die Winkel-Prolilfläche des Nutbodens 72 und der Nutfläche 63 gebildet. Die Teilkammern 400, 600 sorgen durch ihre diagonale Abgrenzung aneinander zwischen dem Stutzenanschlussfuß 21 und dem Anschlussflansch 60 für eine besonders gute spaltfreie Verbindung der Flanschflächen.

Im Ausführungsbeispiel der Fig. 4 kann der Förderschlauch 92 zum Beispiel aus unelastischem, für Wellung oder Rippung besonders geeignetem Material, zum Beispiel aus PTFE bestehen. Hingegen besteht der äußere Anschlussrandteil 920.3 aus für Klemmung und Dichtung besonders geeignetem elastischem Material, z. B. aus EPDM.

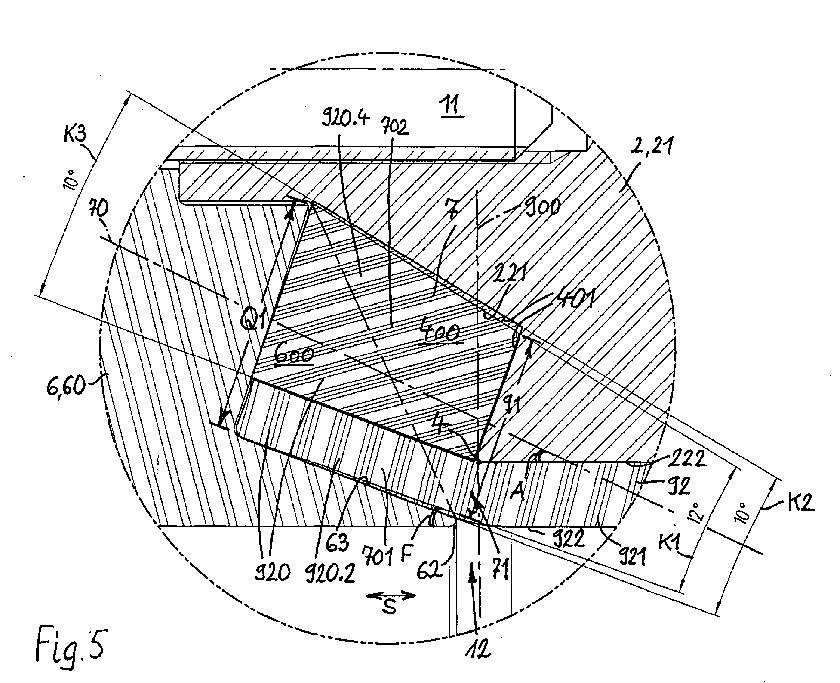

Das Ausführungsbeispiel gemäß Fig. 5 unterscheidet sich von dem der Fig. 4 dadurch, dass der Förderschlauch 92 ohne Außenwellung ist. Aber auch dann kann der Anschlussrand 920, wie gezeigt, zum Beispiel zweiteilig zusammengefügt sein. Zweckmäßig wird ein herkömmlicher Förderschlauch 92 auf die gewünschte Länge abgelängt. Auf den trichterartig geweiteten Basis-Anschlussrandteil 920.2 wird der äußere Anschlussrandteil 920.4 aufgeschoben. Zum Beispiel wird eine reibschlüssige Verbindung hergestellt. Die Anschlussrandteile können z. B. aber auch mittels Klebung aneinandergefügt sein.

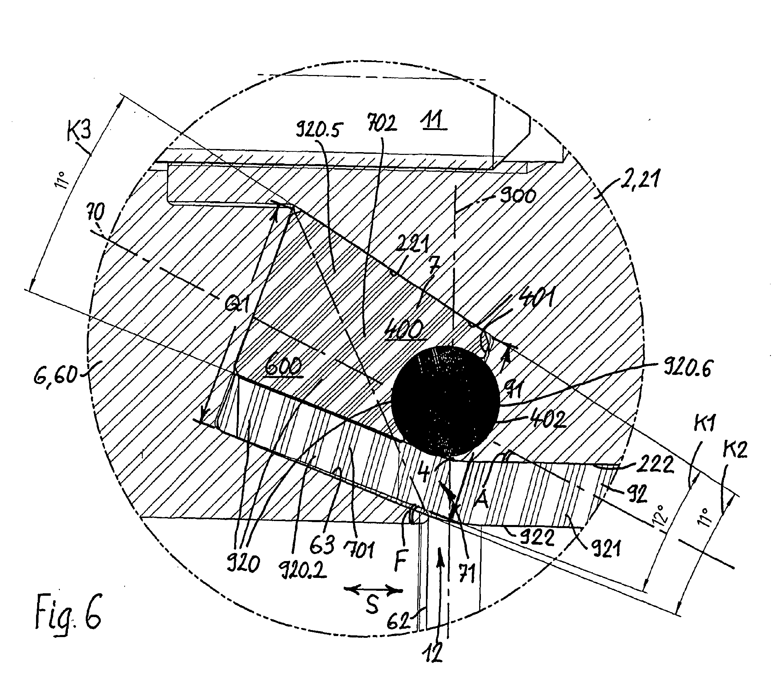

Das Ausführungsbeispiel gemäß Fig. 6 entspricht dem Ausführungsbeispiel gemäß Fig. 5 mit dem Unterschied, dass der wulstförmige Anschlussrand 920 zusätzlich mit einem Anschlussrandteil 920.6 in Form eines O-Rings aus zur Dichtung und Pressung geeignetem federelastischem Material, z. B. aus EPDM ausgestattet ist. Der wulstförmige Anschlussrandteil 920 ist aus dem Basis-Anschlussrandteil 920.2, dem Trapez-Anschlussrandteil 920.5 und dem Anschlussrandteil 920.6 zusammengefügt. Der O-Ring-Anschlussrandteil 920.6 liegt mit einem Abschnitt hinter der Radialebene (Öffnungsebene) 900, in der der Strömungsquerschnitt des Förderschlauches 92 an dem inneren Öffnungsrand 4 liegt. Der O-Ring-Abschnitt greift an der Stutzenanschlussfläche 221 formschlüssig in eine umlaufende, eine Vertiefung bildende Profilfläche 402 ein, die in einen Abschnitt einer im Querschnitt winkeligen Profilfläche 401 der Stutzen-Randausnehmung 41 eingearbeitet ist. Auch der äußere Anschlussrandteil 920.5 springt mit einem Teil einer Profilaufnahme, die den O-Ring formschlüssig einfasst, an der Radialebene 900 zurück. Wie in Fig. 4 und 5 ist die Eckaufnahme des Anschlussrandes 920 im Profil der Fläche 401 ausgebildet. Im Ausführungsbeispiel der Fig. 6 ist K2=K3=11° und K1=12° gewählt worden.

Die Elastizität der Anschlussrandteile 920.2, 920.5 und 920.6 wird abgestuft gewählt. Während das Material des Förderschlauches 92 und damit des Basisteils 920.2 nicht oder nur wenig elastisch ist, wird der Trapez-Anschlussrandteil 920.5 mit einer Elastizität ausgeführt, die die Klemmwirkung durch die Keilanordnung mit den Winkeln K1, K2 und K3 zu der Übergangsstelle 12 hin konzentriert. Der O-Ring wird zur weiteren Verstärkung der Klemmwirkung an dieser Übergangstelle mit noch größerer Elastizität gewählt.

Je nach Anwendungsfall wird der erfindungsgemäße Wulst-Anschlussrand in Kombination und zur Verbindung mit der Anschlussnut insbesondere mit Fehlwinkel, d. h. mit Abweichung von Keilwinkeln, allgemein mit einer zur Übergangsstelle hin konzentrierten Querschnittseinengung, mit Anordnung von mehreren Randanschlussteilen und/oder durch teilweises Versenken des Anschlussrandes an der Stutzenanschlussfläche hinter die Öffnungsebene zurück ausgeführt und eingerichtet. Ein Anschlussrand, der aus mehreren Teilen zusammengefügt ist, wird zweckmäßig dadurch eingerichtet, dass die Anschlussrandteile in Form, elastischer Materialeigenschaft und/oder Anordnung unterschiedlich vorgesehen und aufeinander abgestimmt werden.

## Patentansprüche

1. Verbindungseinrichtung (10) für eine Schlauchleitung (9), umfassend eine zum Einbinden der Schlauchleitung (9) eingerichtete Stutzeneinrichtung (1) mit einem Stutzen (2), der einen rohrförmigen Steckkörper(22) zur Steck- und Klemmverbindung mit dem Schlauchleitungsende und einen Anschlussfuß (21) mit stirnseitiger Anschlussfläche (221) zum Anschluss an ein Leitungsanschlussteil (6) aufweist, wobei die Stutzen-Anschlussfläche (221) eine Anschluss-Randausnehmung (41, 401, 402) aufweist, und umfassend ein an dem Stutzen-Anschlussfuß (21) befestigbares rohrförmiges Leitungsanschlussteil (6) mit Stirnausnehmung (61), wobei der Stutzen (2) zum Einbinden einer Doppelschlauchleitung (9) ausgebildet ist, die einen in der Doppelschlauchleitung (9) innenliegenden Förderschlauch (92) und einen diesen tragenden außenliegenden Tragschlauch (91) aufweist, aus dem der Förderschlauch (92) am Schlauchleitungsende mit einem einen Anschlussrand (920) aufweisenden Anschlussabschnitt (921) hervorragt, wobei die Stirnausnehmung (61) des Leitungsanschlussteils (6) in Korrespondenz mit der Randausnehmung (41, 401, 402) des Stutzen-Anschlussfußes (21) eine zur Form- und Kraftschlussverbindung mit dem Anschlussabschnitt (921) des Förderschlauches (92) vorgesehene Anschlussnut (7) bildet, die mit einem in sie unverlierbar einfassenden wulstförmigen Klemm-/Dichtteil als Klemm- und Dichtnut wirkt, und wobei der Stutzen-Steckkörper (22) einen inneren Rohrumfangsabschnitt (222) mit einem inneren Öffnungsrand (4) der Stutzen-Anschlussfläche (221) aufweist, an dem der Anschlussrand (920) des Förderschlauchs (92) mit Abwinkelung zum Herstellen einer Strömungsstörungen vermeidenden Strömungs-Übergangsstelle (12) zwischen dem Schlauchstutzen (2) und dem Leitungsanschlussteil (6) zu liegen kommt, **dadurch gekennzeichnet, dass** die Anschlussnut (7) an der Übergangsstelle (12) mit Ausrichtung unter spitzem Winkel (A) gegenüber der Strömungs- und Leitungsrichtung (S) an den inneren Rohrumfangsabschnitt (222) des Stutzen-Anschlussfußes (21) an dem Öffnungsrand (4) der Stutzen-Anschlussfläche (221) anschließt, wobei an der Übergangsstelle (12) zwischen dem Öffnungsrand (4) und einem umlaufenden Rand (62) des Leitungsanschlussteils (6) ein Öffnungsschlitz (71) mit einer Schlitzbreite ausgebildet ist, die der Wandstärke des Förderschlauches (92) an der Übergangsstelle (12) entspricht, wobei die Anschlussnut (7) zur dichtend klemmenden und unverlierbaren Aufnahme des Förderschlauch-Anschlussrandes (920) in versenkter Anordnung gegenüber dem Öffnungsschlitz (71) aufgeweitet ist, wobei der Förderschlauch-Anschlussrand (920) wulstförmig im Querschnitt formgleich mit der Anschlussnut (7) ist, und wobei der umlaufende Rand (62) des Leitungsanschlussteils (6) in einem Kantenbereich, in dem der wulstförmige Förderschlauch-Anschlussrand (920) aus gerader Strömungs-/Leitungsrichtung (S) abwinkelt, unter zu der geraden Leitungs-/ Strömungsrichtung (S) flachem Winkel (F) eine Klemmanlage für den wulstförmigen Förderschlauch-Anschlussrand (920) an der Übergangsstelle (12) ausbildet.

2. Verbindungseinrichtung nach Anspruch 1, **dadurch gekennzeichnet, dass** die Anschlussnut (7) zum Ausüben von Klemmkraft auf den Förderleitungs-Anschlussrand (920) mit einem Querschnitt ausgebildet ist, der im unverpressten Zustand kleiner als der Querschnitt des wulstförmigen Förderleitungs-Anschlussrandes (920) ist.

3. Verbindungseinrichtung nach Anspruch 1 oder 2, **dadurch gekennzeichnet, dass** die Anschlussnut (7) mit sich von dem Leitungsanschlussteil (6) zu dem Stutzen (2) verengendem, vorzugsweise keilförmigem oder trapezförmigem Querschnitt ausgebildet ist.

4. Verbindungseinrichtung nach einem der Ansprüche 1 bis 3, **dadurch gekennzeichnet, dass** die Querschnitte der Anschlussnut (7) und des Anschlussrandes (920) des Förderschlauchs (92) in Anpassung aufeinander derart ausgebildet sind, dass **dadurch** in dem Bereich des Anschlussrandes (920), der unmittelbar an die Wandung (922) des Förderschlauchs (92) anschließt, eine Klemm- und Dichtpressung bewirkt ist, die in dem korrespondierenden Teil der Anschlussnut (7) größer als die Klemm- und Dichtpressung in dem übrigen Teil der Anschlussnut (7) ist.

5. Verbindungseinrichtung nach Anspruch 4, **dadurch gekennzeichnet, dass** Formquerschnitte der Anschlussnut (7) und des Anschlussrandes (920) keilförmig sind, wobei der Anschlussrand (920) einen Keilwinkel (K2) aufweist, der im unverpressten Zustand kleiner als der Keilwinkel (K1) der Anschlussnut (7) ist.

6. Verbindungseinrichtung nach einem der Ansprüche 1 bis 5, **dadurch gekennzeichnet, dass** sich die Anschlussnut (7) und der Anschlussrand (920) mit entsprechenden Formquerschnitten, ausgehend von dem Öffnungsschlitz (71), in das Leitungsanschlussteil (6) hinein erweitern.

7. Verbindungseinrichtung nach einem der Ansprüche 1 bis 6, **dadurch gekennzeichnet, dass** der Öffnungsschlitz (71) der Anschlussnut (7) eine Schlitzbreite aufweist, die kleiner als die oder zumindest im Wesentlichen gleich der Wandungsstärke des Förderschlauches (92) ist.

8. Verbindungseinrichtung nach einem der Ansprüche 1 bis 7, **dadurch gekennzeichnet, dass** der im Querschnitt flache Leitungsanschlussteil-Rand (62) des Öffnungsschlitzes (71) einen im Strömungsquerschnitt niveaugleichen Wandungsübergang an der Übergangsstelle (12) zwischen dem Leitungsanschlussteil (6) und dem Förderschlauch (92) herstellt.

9. Verbindungseinrichtung nach einem der Ansprüche 1 oder 8, **dadurch gekennzeichnet, dass** die Stutzen-Randausnehmung mit einer stirnseitigen Profilfläche (401, 402) ausgeformt ist, die an und gegenüber dem inneren Öffnungsrand (4) des Stutzenanschlussfußes (21) an der Stutzenanschlussfläche (221) zurückspringt.

10. Verbindungseinrichtung nach Anspruch 9, **dadurch gekennzeichnet, dass** die Profilfläche eine im Querschnitt winkelige Profilfläche (401), d.h. Winkelfläche, ist, die eine Eckaufnahme für den Förderschlauch-Anschlussrand (920) bildet.

11. Verbindungseinrichtung nach Anspruch 9, **dadurch gekennzeichnet, dass** die Profilfläche (402) durch eine Ring-Vertiefungsfläche für einen umlaufenden elastischen, vorzugsweise als O-Ring geformten Dichtungsteil (920.6) des Förderschlauch-Anschlussrandes (920) gebildet ist.

12. Verbindungseinrichtung nach einem der Ansprüche 1 bis 11, **dadurch gekennzeichnet, dass** die Anschlussnut (7) durch eine Kammer gebildet ist, die in einen dem Öffnungsschlitz (71) zugeordneten inneren Basisraum (701) zur Aufnahme eines inneren Basisteils (920.1, 920.2) des Förderschlauch-Anschlussrandes (920) und in einen den Basisraum (701) umgebenden äußeren Anschlussraum (702) zur Aufnahme wenigstens eines klemmelastischen äußeren Teils (920.3 bis 920.6) des Förderschlauch-Anschlussrandes (920) unterteilt ist.

13. Verbindungseinrichtung nach Anspruch 12, **dadurch gekennzeichnet, dass** sich der äußere Anschlussraum (702) im Querschnitt zu dem Stutzen (2) hin verjüngt, wobei er vorzugsweise Trapezform oder trapezähnliche Form aufweist.

14. Verbindungseinrichtung nach einem der Ansprüche 1 bis 13, **dadurch gekennzeichnet, dass** der Förderschlauch-Anschlussrand (920) einstückig mit der Wandung des Förderschlauches (92) aus dem Schlauchmaterial gebildet ist.

15. Verbindungseinrichtung nach einem der Ansprüche 1 bis 13, **dadurch gekennzeichnet, dass** der Förderschlauch-Anschlussrand (920) einteilig ausgebildet und an die Wandung des Förderschlauches (92) angefügt ist.

16. Verbindungseinrichtung nach einem der Ansprüche 1 bis 13, **dadurch gekennzeichnet, dass** der Förderschlauch-Anschlussrand (920) mit aneinandergefügten Anschlussrandteilen (920.1 bis 920.6) mehrteilig ausgebildet ist, wobei insbesondere wenigstens zwei Anschlussrandteile (920.1 bis 920.6) des Anschlussrandes (920) formschlüssig vereinigt, insbesondere miteinander verrastet sind.

17. Verbindungseinrichtung nach Anspruch 16, **dadurch gekennzeichnet, dass** wenigstens ein zweiter der Anschlussrandteile (920.1 bis 920.6) des Förderschlauches (92) durch einen im Bereich des Endes der Förderschlauch-Strömungswandung (922) umlaufenden Ringteil (920.6), vorzugsweise in Form eines dichtenden elastischen O-Rings gebildet ist.

18. Verbindungseinrichtung nach Anspruch 16 oder 17, **dadurch gekennzeichnet, dass** ein erster der Anschlussrandteile einen Basisrandteil (920.1, 920.2) bildet, der durch einen Endabschnitt der Wandung des Förderschlauchs (92) gebildet ist, der sich trichterartig öffnend geformt ist, und dass wenigstens ein zweiter der Anschlussrandteile durch einen den Basisrandteil (920.1 und 920.2) umgebenden Anschlussrandteil (920.3 bis 920.6) gebildet ist.

19. Verbindugnseinrichtung nach Anspruch 18, **dadurch gekennzeichnet, dass** wenigstens ein zweiter, den Basisrandteil (920.1, 920.2) umgebender Anschlussrandteil (920.3 bis 920.5) Trapezform oder trapezähnliche Form aufweist, die sich im Querschnitt zur freien Endseite des Anschlussrandes (920) hin erweitern.

20. Verbindungseinrichtung nach einem der Ansprüche 16 bis 19, **dadurch gekennzeichnet, dass** wenigstens ein zweiter der Anschlussrandteile (920.3 bis 920.5) einen hinter das Ende der Strömungswandung (922) des Förderschlauchs (92) zurückgreifenden umlaufenden Abschnitt aufweist.

21. Verbindungseinrichtung nach einem der Ansprüche 16 bis 20, **dadurch gekennzeichnet, dass** wenigstens zwei der Anschlussrandteile (920.1 bis 920.6) so angeordnet und durch die Klemm- und Dichtwirkung beeinflussende Materialunterschiede aufeinander abgestimmt sind, dass **dadurch** in dem Bereich des Anschlussrandes (920), der unmittelbar an die Strömungswandung (922) des Förderschlauches (92) anschließt, eine Klemm- und Dichtpressung bewirkt ist, die in dem korrespondierenden Teil der Anschlussnut (7) größer als die Klemm- und Dichtpressung in dem übrigen Teil der Anschlussnut (7) ist.

## Claims

1. Connecting device (10) for a hose line (9), comprising a fitting device (1) designed for insertion of the hose line (9), with a fitting (2) which has a tubular insertion body (22) for insertion and clamping connection to the hose line end, and a connecting base (21) with a connecting surface (221) at the end face for connection to a pipe connecting portion (6), the fitting connecting surface (221) having a connecting edge recess (41, 401, 402), and comprising a tubular pipe connecting portion (6) with end-face recess (61) that can be attached to the fitting connecting base (21), the fitting (2) being designed for insertion of a double hose line (9) which comprises a conveying hose (92) located on the inside in the double hose line (9) and a supporting hose (91) located on the outside and supporting the latter, from which the conveying hose (92) protrudes at the hose line end with a connecting section (921) having a connecting edge (920), the end-face recess (61) of the pipe connecting portion (6) in correspondence with the edge recess (41, 401, 402) of the fitting connecting base (21) forming a connecting groove (7) which is provided for positive and non-positive connection to the connecting section (921) of the conveying hose (92) and which with a bead-like clamping/sealing portion held captive in it acts as a clamping and sealing groove, and the fitting insertion body (22) having an inner pipe circumference section (222) with an inner opening edge (4) of the fitting connecting surface (221) at which the connecting edge (920) of the conveying hose (92) with an angled portion comes to lie for producing a flow junction (12) between the hose fitting (2) and the pipe connecting portion (6), which flow junction (12) avoids disturbance of flow, **characterized in that** the connecting groove (7) at the junction (12) with alignment at an acute angle (A) to the direction of flow and conduction (S) adjoins the inner pipe circumference section (222) of the fitting connecting base (21) at the opening edge (4) of the fitting connecting surface (221), an opening slot (71) being formed at the junction (12) between the opening edge (4) and a circumferential edge (62) of the pipe connecting portion (6), with a slot width which corresponds to the wall thickness of the conveying hose (92) at the junction (12), the connecting groove (7) being widened relative to the opening slot (71) in a countersunk arrangement for sealing, clamping and captive reception of the conveying hose connecting edge (920), the conveying hose connecting edge (920) being bead-like and having the same shape in cross-section as the connecting groove (7), and the circumferential edge (62) of the pipe connecting portion (6) forming, in an edge region in which the bead-like conveying hose connecting edge (920) is angled out of the straight direction of flow/conduction (S), a clamping abutment for the bead-like conveying hose connecting edge (920) at the junction (12) at a flat angle (F) to the straight direction of flow/conduction (S).

2. Connecting device according to claim 1, **characterised in that** the connecting groove (7) is designed to exert clamping force on the conveying pipe connecting edge (920) with a cross-section which is smaller in the uncompressed state than the cross-section of the bead-like conveying pipe connecting edge (920).

3. Connecting device according to claim 1 or 2, **characterised in that** the connecting groove (7) is designed with a preferably wedge-shaped or trapezium-shaped cross-section which narrows from the pipe connecting portion (6) to the fitting (2).

4. Connecting device according to any of claims 1 to 3, **characterised in that** the cross-sections of the connecting groove (7) and the connecting edge (920) of the conveying hose (92) are designed in adaptation to each other in such a way that as a result, in the region of the connecting edge (920) which directly adjoins the wall (922) of the conveying hose (92), a clamping and sealing compression is brought about, which is greater in the corresponding part of the connecting groove (7) than the clamping and sealing compression in the remainder of the connecting groove (7).

5. Connecting device according to claim 4, **characterised in that** shaped cross-sections of the connecting groove (7) and the connecting edge (920) are wedge-shaped, the connecting edge (920) having a wedge angle (K2) which in the uncompressed state is smaller than the wedge angle (K1) of the connecting groove (7).

6. Connecting device according to any of claims 1 to 5, **characterised in that** the connecting groove (7) and the connecting edge (920) widen with corresponding shaped cross-sections, starting from the opening slot (71), into the pipe connecting portion (6).

7. Connecting device according to any of claims 1 to 6, **characterised in that** the opening slot (71) of the connecting groove (7) has a slot width which is smaller than or at least substantially equal to the wall thickness of the conveying hose (92).

8. Connecting device according to any of claims 1 to 7, **characterised in that** the pipe connecting portion edge (62) of the opening slot (71), which is of flat cross-section, creates a wall junction at the same level in flow cross-section at the junction (12) between the pipe connecting portion (6) and the conveying hose (92).

9. Connecting device according to any of claims 1 to 8**, characterised in that** the fitting edge recess is formed with an end-face profiled surface (401, 402) which is set back at and from the inner opening edge (4) of the fitting connecting base (21) at the fitting connecting surface (221).

10. Connecting device according to claim 9, **characterised in that** the profiled surface forms a profiled surface (401) of angled cross-section, i.e. an angled surface, which forms a corner receptacle for the conveying hose connecting edge (920).

11. Connecting device according to claim 9, **characterised in that** the profiled surface (402) is formed by an annular depression surface for a circumferential resilient sealing portion (920.6), preferably formed as an O-ring, of the conveying hose connecting edge (920).

12. Connecting device according to any of claims 1 to 11, **characterised in that** the connecting groove (7) is formed by a chamber which is divided into an inner base chamber (701) associated with the opening slot (71) for receiving an inner base portion (920.1, 920.2) of the conveying hose connecting edge (920), and an outer connecting chamber (702) surrounding the base chamber (701) for receiving at least one outer portion (920.3 to 920.6) of the conveying hose connecting edge (920) which is resilient for clamping.

13. Connecting device according to claim 12, **characterised in that** the outer connecting chamber (702) tapers in cross-section towards the fitting (2), preferably having a trapezium shape or trapezium-like shape.

14. Connecting device according to any of claims 1 to 13, **characterised in that** the conveying hose connecting edge (920) is formed in one piece with the wall of the conveying hose (92) from the hose material.

15. Connecting device according to any of claims 1 to 13, **characterised in that** the conveying hose connecting edge (920) is in one part and joined to the wall of the conveying hose (92).

16. Connecting device according to any of claims 1 to 13, **characterised in that** the conveying hose connecting edge (920) is in several parts with connecting edge portions (920.1 to 920.6) joined together, in particular at least two connecting edge portions (920.1 to 920.6) of the connecting edge (920) being joined in positive connecting, in particular locked together by catch mechanism.

17. Connecting device according to claim 16, **characterised in that** at least a second one of the connecting edge portions (920.1 to 920.6) of the conveying hose (92) is formed by a circumferential ring portion (920.6) in the region of the end of the conveying hose flow wall (922), preferably in the form of a sealing resilient O-ring.

18. Connecting device according to claim 16 or 17, **characterised in that** a first one of the connecting edge portions forms a base edge portion (920.1, 920.2) which is formed by an end section of the wall of the conveying hose (92) which is shaped to open like a funnel, and **in that** at least a second one of the connecting edge portions is formed by a connecting edge portion (920.3 to 920.6) which surrounds the base edge portion (920.1 and 920.2).

19. Connecting device according to claim 18, **characterised in that** at least one second connecting edge portion (920.3 to 920.5) surrounding the base edge portion (920.1, 920.2) has a trapezium shape or trapezium-like shape, which widens in cross-section towards the free end side of the connecting edge (920).

20. Connecting device according to any of claims 16 to 19, **characterised in that** at least one second one of the connecting edge portions (920.3 to 920.5) has a circumferential section set back behind the end of the flow wall (922) of the conveying hose (92).

21. Connecting device according to any of claims 16 to 20, **characterised in that** at least two of the connecting edge portions (920.1 to 920.6) are arranged and coordinated with each other by material differences which influence the clamping and sealing effect in such a way that as a result, in the region of the connecting edge (920) which directly adjoins the flow wall (922) of the conveying hose (92), a clamping and sealing compression is brought about, which is greater in the corresponding part of the connecting groove (7) than the clamping and sealing compression in the remainder of the connecting groove (7).

## Revendications

1. Dispositif de liaison (10) destiné à une conduite en tuyau souple (9), ledit dispositif de liaison comportant un dispositif à manchon (1) destiné à être intégré dans la conduite en tuyau souple (9) et comportant un manchon (2) qui comporte un corps tubulaire insérable (22) destiné à réaliser une liaison par insertion et serrage à l'extrémité de la conduite en tuyau souple et une base de raccordement (21) présentant une surface de raccordement frontale (221) destinée à réaliser être raccordé à une partie de raccordement (6) de la conduite, la surface de raccordement (221) du manchon présentant un évidement de bord de raccordement (41, 401, 402), et comportant une pièce tubulaire de raccordement de conduite (6) qui peut être fixée à la base de raccordement (21) du manchon et qui possède un évidement frontal (61), le manchon (2) étant conformé pour être relié à une double conduite en tuyau souple (9) qui possède un tuyau souple de transport (92) situé à l'intérieur de la double conduite en tuyau souple (9) et un tuyau souple de manchon (91), situé à l'extérieur, qui supporte ladite double conduite en tuyau souple et duquel le tuyau souple de transport (92) fait saillie à l'extrémité de la conduite en tuyau souple par une portion de raccordement (921) qui possède un bord de raccordement (920), l'évidement frontal (61) de la pièce de raccordement de conduite (6) formant en correspondance de l'évidement de bord (41, 401, 402) de la base de raccordement (21) du manchon une gorge de raccordement (7) qui est prévue pour être reliée par correspondance de formes ou par adhérence à la portion de raccordement (921) du tuyau souple de transport (92) et qui agit comme une gorge de serrage ou d'étanchéité avec une pièce de serrage ou d'étanchéité torique qui s'enchâsse de manière imperdable dans ladite gorge de raccordement (7), et le corps insérable (22) du manchon possédant une portion périphérique tubulaire intérieure (222) comportant un bord d'ouverture intérieur (4) de la surface de raccordement (221) du manchon, bord contre lequel le bord de raccordement (920) du tuyau souple de transport (92) vient porter angulairement pour réaliser une transition d'écoulement (12), évitant de perturber l'écoulement, entre le manchon de tuyau souple (2) et la pièce de raccordement de conduite (6), **caractérisé en ce que** la gorge de raccordement (7) au niveau la transition (12) se raccorde, en formant un angle aigu (A) par rapport à la direction (S) de la conduite et de l'écoulement, à la portion périphérique tubulaire (222) de la base de raccordement (21) du manchon au niveau du bord d'ouverture (4) de la surface de raccordement (221) du manchon, une fente d'ouverture (71) dont la largeur correspond à l'épaisseur de paroi du tuyau souple de transport (92) au niveau de la transition (12) étant ménagée au niveau de la transition (12) entre le bord d'ouverture (4) et un bord circulaire (62) de la pièce de raccordement de conduite (6), la gorge de raccordement (7) destinée à recevoir de façon étanche par serrage et de manière imperdable le bord de raccordement (920) du tuyau souple de transport dans une disposition enfoncée par rapport à la fente d'ouverture (71) étant évasée, le bord de raccordement (920) du tuyau souple de transport ayant en coupe transversale une forme torique identique à celle de la gorge de raccordement (7), et le bord circulaire (62) de la pièce de raccordement de conduite (6) constituant, dans une région de bordure dans laquelle le bord de raccordement torique (920) du tuyau souple de transport s'écarte de la direction rectiligne (S) de la conduite et de l'écoulement, un système de serrage du bord de raccordement torique (920) du tuyau souple de transport au niveau de la transition (12) en formant un angle plat (F) par rapport à la direction rectiligne (S) de la conduite et de l'écoulement.

2. Dispositif de liaison selon la revendication 1, **caractérisé en ce que**, pour exercer une force de serrage sur le bord de raccordement (920) de la conduite de transport, la gorge de raccordement (7) est conformée avec une section qui, à l'état non comprimé, est inférieure à la section du bord torique de raccordement de conduite de transport (920).

3. Dispositif de liaison selon la revendication 1 ou 2, **caractérisé en ce que** la gorge de raccordement (7) est conformée avec une section, de préférence cunéiforme ou trapézoïdale, qui se rétrécit depuis la pièce de raccordement de conduite (6) vers le manchon (2).

4. Dispositif de liaison selon l'une des revendications 1 à 3, **caractérisé en ce que** la section de la gorge de raccordement (7) et la section du bord de raccordement (920) du tuyau de transport (92) sont conformées de façon à s'adapter l'une à l'autre afin de générer ainsi, dans la région du bord de raccordement (920) qui se raccorde directement à la paroi (922) du tuyau de transport (92), une compression de serrage et d'étanchéité qui, dans la partie correspondante de la gorge de raccordement (7), est supérieure à la compression de serrage et d'étanchéité dans la partie restante de la gorge de raccordement (7).

5. Dispositif de liaison selon la revendication 4, **caractérisé en ce que** la section de la gorge de raccordement (7) et la section du bord de raccordement (920) sont cunéiformes, le bord de raccordement (920) formant un angle en V (K2) qui, à l'état non comprimé, est inférieur à l'angle en V (K1) de la gorge de raccordement (7).

6. Dispositif de liaison selon l'une des revendications 1 à 5, **caractérisé en ce que** la gorge de raccordement (7) et le bord de raccordement (920), de sections correspondantes, s'évasent, en partant de la fente d'ouverture (71), jusque dans la pièce de raccordement de conduite (6).

7. Dispositif de liaison selon l'une des revendications 1 à 6, **caractérisé en ce que** la fente d'ouverture (71) de la gorge de raccordement (7) a une largeur qui est inférieure, ou au moins sensiblement égale, à l'épaisseur de paroi du tuyau de transport (92).

8. Dispositif de liaison selon l'une des revendications 1 à 7, **caractérisé en ce que** le bord (62), de section plate, de la fente d'ouverture (71), au niveau de la pièce de raccordement de conduite, réalise une transition de paroi, de même section d'écoulement, au niveau de la transition (12) entre la pièce de raccordement de conduite (6) et le tuyau de transport (92).

9. Dispositif de liaison selon l'une des revendications 1 ou 8, **caractérisé en ce que** l'évidement en bordure de manchon est conformé avec une surface profilée frontale (401, 402) qui est en retrait au niveau du bord d'ouverture intérieur (4), et par rapport à celui-ci, de la base de raccordement de manchon (21) au niveau de la surface de raccordement de manchon (221).

10. Dispositif de liaison selon la revendication 9, **caractérisé en ce que** la surface profilée est une surface profilée (401) de section angulaire, c'est-à-dire une surface angulaire qui forme un logement angulaire destiné au bord de raccordement (920) du tuyau de transport.

11. Dispositif de liaison selon la revendication 9, **caractérisé en ce que** la surface profilée (402) est formée par une surface en creux annulaire destinée à une pièce d'étanchéité (920.6) circulaire élastique, de préférence torique, du bord de raccordement (920) du tuyau de transport.

12. Dispositif de liaison selon l'une des revendications 1 à 11, **caractérisé en ce que** la gorge de raccordement (7) est formée par une chambre qui est subdivisée en un espace de base intérieure (701) associé à la fente d'ouverture (71) et destiné à recevoir une partie de base intérieure (920.1, 920.2) du bord de raccordement (920) du tuyau de transport et en un espace de raccordement extérieur (702) entourant l'espace de base (701) et destiné à recevoir au moins une partie extérieure à serrage élastique (920.3 à 920.6) du bord de raccordement (920) du tuyau de transport.

13. Dispositif de liaison selon la revendication 12**, caractérisé en ce que** l'espace de raccordement extérieur (702) s'amincit en coupe transversale en direction du manchon (2), ledit espace de raccordement ayant de préférence une forme trapézoïdale ou ressemblant à un trapèze.

14. Dispositif de liaison selon la revendication 1 à 13, **caractérisé en ce que** le bord de raccordement (920) du tuyau de transport est constitué d'une seule pièce avec la paroi du tuyau de transport (92), à partir du matériau du tuyau.

15. Dispositif de liaison selon l'une des revendications 1 à 13, **caractérisé en ce que** le bord de raccordement (920) du tuyau de transport est constitué d'une seule pièce et est adjoint à la paroi du tuyau de transport (92).

16. Dispositif de liaison selon l'une des revendications 1 à 13, **caractérisé en ce que** le bord de raccordement (920) du tuyau de transport est constitué de plusieurs pièces, les pièces de bord raccordement (920.1 à 920.6) étant adjointes l'une à l'autre et notamment au moins deux pièces de bord de raccordement (920.1 à 920.6) du bord de raccordement (920) étant réunies par complémentarité de formes, notamment encliquetées l'une à l'autre.

17. Dispositif de liaison selon la revendication 16, **caractérisé en ce que** au moins une deuxième des pièces de bord de raccordement (920.1 à 920.6) du tuyau de transport (92) est formée par une pièce annulaire (920.6) qui est circulaire dans la région de l'extrémité de la paroi d'écoulement (922) du tuyau de transport et qui se présente de préférence sous la forme d'un joint d'étanchéité torique élastique.

18. Dispositif de liaison selon la revendication 16 ou 17, **caractérisé en ce qu'**une première des pièces de bord de raccordement forme une pièce de bord de base (920.1, 920.2) qui est formée par une portion d'extrémité de la paroi du tuyau de transport (92), laquelle portion d'extrémité est formée de façon à s'ouvrir en entonnoir, et **en ce que** au moins une deuxième des pièces de bord de raccordement est formée par une pièce de bord de raccordement (920.3 à 920.6) entourant la pièce de bord de base (920.1 et 920.2).

19. Dispositif de liaison selon la revendication 18, **caractérisé en ce que** au moins une deuxième pièce de bord de raccordement (920.3 à 920.5), entourant la pièce de bord de base (920.1, 920.2), a une forme trapézoïdale ou ressemblant à un trapèze qui s'évase en coupe transversale en direction du côté de l'extrémité libre du bord de raccordement (920).

20. Dispositif selon l'une des revendications 16 à 19**, caractérisé en ce que** au moins une deuxième des pièces de bord de raccordement (920.3 à 920.5) possède une portion circulaire qui s'engage en arrière de l'extrémité de la paroi d'écoulement (922) du tuyau de transport (92).

21. Dispositif de liaison selon l'une des revendications 16 à 20, **caractérisé en ce que** au moins deux des pièces de bord de raccordement (920.1 à 920.6) sont disposées, et adaptées l'une à l'autre par des différences de matériaux influant sur l'action de serrage et d'étanchéité, de façon à générer, dans la région du bord de raccordement (920) qui se raccorde directement à la paroi d'écoulement (922) du tuyau de transport (92), une compression de serrage et d'étanchéité qui, dans la partie correspondante de la gorge de raccordement (7), est supérieure à la compression de serrage et d'étanchéité dans la partie restante de la gorge de raccordement (7).
